# EUROPÄISCHE PATENTSCHRIFT

(11) **EP 2 383 603 B1**
(45) Veröffentlichungstag und Bekanntmachung des Hinweises auf die Patenterteilung: **03.09.2014**
(21) Anmeldenummer: 11163184.2
(22) Anmeldetag: 20.04.2011
(51) Int. Cl.: G02C 7/02

(54) **Verfahren zum Fertigen einer Brillenlinse**
Method for producing a spectacle lens
Procédé de fabrication de verres de lunette

(30) Priorität: 29.04.2010 DE 102010018710
(43) Veröffentlichungstag der Anmeldung: 02.11.2011
(73) Patentinhaber: Carl Zeiss Vision International GmbH, 73430 Aalen (DE)
(72) Erfinder: Kratzer, Timo, 73434, Aalen (DE); Krug, Herbert, 73433, Aalen (DE)
(74) Vertreter: Carl Zeiss AG - Patentabteilung

(56) Entgegenhaltungen:
- WO-A1-2005/098518
- WO-A1-2006/020422
- WO-A2-2008/039802
- WO-A2-2009/115932
- US-A1- 2006 209 255
- US-A1- 2006 238 712

## Beschreibung

Die Erfindung betrifft ein Verfahren zum Fertigen einer Brillenlinse.

Es ist eine Vielzahl an in der Regel computerimplementierten Verfahren bekannt, das Design, also die Geometrie, einer optischen Linse mit einer Linsenvorderfläche und einer Linsenrückfläche, insbesondere einer Brillenlinse mit einer Brillenlinsenvorderfläche und einer Brillenlinserückfläche, zu berechnen, um die gewünschten Abbildungseigenschaften zu erhalten bzw. um diesen gewünschten Abbildungseigenschaften zumindest sehr nahe zu kommen. Anders ausgedrückt geht es bei einem Verfahren zum Berechnen des Designs einer Brillenlinse um die bewusste Gestaltung der beiden Flächen der Brillenlinse, nämlich der Rückfläche die dazu bestimmt ist, in Richtung des Auges des Brillenträgers zu weisen und der zur Ausrichtung auf die Objektseite vorgesehenen Brillenlinsenvorderfläche, um bestimmte optische Eigenschaften zu erzielen. Wenn es um die bewusste Gestaltung einer Fläche eines Brillenglases geht, spricht man auch von Flächendesign eines Brillenglases bzw. einer Brillenlinse. Ganz allgemein sind Berechnungsmethoden für das Brillenlinsendesign bekannt, die die Welleneigenschaften oder die Teilcheneigenschaften des Lichts modellieren. Zur Berechnung des Designs von Brillenlinsen werden in der Regel numerische Lichtstrahlverfolgungsverfahren, sogenannte Ray-Tracing-Algorithmen, verwendet. Der Aufsatz "Konzeption und Entwicklung von Gleitsichtgläsem" von Werner Köppen, in der Deutschen Optiker Zeitschrift DOZ vom Oktober 1995, Seiten 42 bis 45 mag einen ersten Eindruck der Komplexität derartiger Berechnungen geben.

Die Brillenlinsengeometrie wird bei allen o.a. Methoden auf Basis von monochromatischem Licht, also Licht nur einer Wellenlänge, berechnet. Für diese Wellenlänge, die sogenannte Designwellenlänge, wird für das zur Herstellung der Brillenlinse verwendete Material entsprechend den materialabhängigen Dispersionseigenschaiten die Brechzahl ermittelt, welche dann unmittelbar in das Berechnungsverfahren einfließt.

Nahezu jedes Brillenglas (der Ausdruck "Glas" hat sich unabhängig vom verwendeten Material und dessen Struktur etabliert) wird aber in polychromatischer Umgebung verwendet. Das menschliche Auge ist fähig, Licht mit Wellenlängen im Bereich von ungefähr 380 nm bis 750 nm wahrzunehmen. Das Maximum der Wahrnehmung des menschlichen Auges liegt unter Tageslichtbedingungen bei etwa 555 nm (photopisches Sehen), bei Nacht bei etwa 510 nm (skotopisches Sehen). Der gesamte Seheindruck ist also eine gewichtete Summe aus Wahrnehmungen aller sichtbaren Wellenlängen.

Da ein Brillenglas also nur für eine einzige Wellenlänge, nämlich die Designwellenlänge, berechnet oder gar optimiert ist, sind sogenannte chromatische Aberrationen jedem konventionellen Brillenglas inhärent. Durch die Abhängigkeit der Empfindlichkeit des menschlichen Auges von der Wellenlänge und der Umgebungshelligkeit liefern aktuelle Berechnungen von Brillenlinsengeometrien keine auf polychromatisches Licht ausgelegte Sehleistung.

Chromatische Aberrationen (von griech. chroma, die Farbe und lat. aberrare, abschweifen) sind Abbildungsfehler optischer Linsen, die dadurch entstehen, dass Licht unterschiedlicher Wellenlänge oder Farbe verschieden stark gebrochen wird. Im Falle einer Sammellinse führt dies zu unterschiedlichen Brennweiten für verschiedene Wellenlängen, d. h. der Blauanteil des Bildes wird vor dem Rotanteil fokussiert

Es ist bekannt, diese Fehler durch Kombination von mehreren Linsen aus Materialien verschiedener Dispersion zu korrigieren. Werden dabei die am stärksten voneinander abweichenden Wellenlängen, beziehungsweise die Grundfarben Rot und Blau, zusammengeführt, spricht man von einer achromatischen Korrektur oder einer achromatischen Linse. Wird zudem die Grundfarbe Grün mit den beiden anderen zusammengelegt, handelt es sich um eine apochromatische Korrektur. Diese Korrektur ist allerdings nur bei sehr hochwertigen - und entsprechend teuren - optischen Systemen möglich. Brillenlinsen mit einer achromatischen oder apochromatischen Korrektur sind nicht preisgünstig herstellbar, so dass diese Korrektur im Allgemeinen nicht zum Einsatz kommt.

In der Digitalfotografie lassen sich Farbfehler mit Hilfe einer elektronischen Bildverarbeitung nachträglich korrigieren, indem die verschiedenen Farbkanäle des Bildes unterschiedlich skaliert werden. Eine derartige Korrektur ließe sich z.B. bei einer sogenannten elektroaktiven Brillenlinse realisieren, deren Brechkraft mit Hilfe eines elektrischen Signals lokal einstellbar ist. Eine herkömmliche Brillenlinse weist diese Korrekturmöglichkeit jedoch nicht auf.

Da diffraktive Strukturen und refraktive optische Linsen entgegensetztes chromatisches Verhalten zeigen, können Kombinationen beider Bauteile so genannte achromatische (d. h. wellenlängenunabhängige) Hybrid-Optiken bilden. Während die Geometrie klassischer Linsen im Allgemeinen mit Hilfe von Lichtstrahlverfolgungsverfahren berechnet wird, verwendet man zur Berechnung diffraktiver Strukturen im Allgemeinen wellenoptische Verfahren. Als Hybrid-Optiken ausgebildete Brillenlinsen sind aufgrund der Komplexität der Herstellung derzeit nicht für den Massenmarkt geeignet.

Nicht nur zur Korrektion der Fehlsichtigkeit des menschlichen Auges vorgesehene Brillenlinsen weisen inhärent chromatische Aberrationen auf, auch die optischen wirksamen Bestandteile des menschlichen Auges selbst weisen Farbfehler auf. Das menschliche Auge kann nämlich durch seine veränderliche Linse die Brennweite nur an jeweils eine Wellenlänge des einfallenden Lichtes anpassen. Zum Teil wird dieses Phänomen bei der Signalserfassung des Auges unmittelbar ausgenutzt, weil nämlich die Farbrezeptoren auf der Retina in geeigneter Weise lokal voneinander getrennt angeordnet sind. Auf das menschliche Auge treffende Kombinationen von Farben mit sehr weit auseinander liegenden Wellenlängen werden dennoch als unangenehm empfunden.

Die WO 2005/098518 A1 beschäftigt sich mit dem letztgenannten Effekt, nämlich mit der Korrektion von durch unterschiedliche Brechungsindizes der Materialien in den optischen Komponenten des menschlichen Auges für verschiedene Wellenlängen verursachten Farbfehlern. Es wird ein Verfahren vorgestellt, wie z.B. ein Brillenglas in Form einer Hybrid-Optik aus refraktiver optischer Linse mit diffraktiver Oberflächenstruktur zur Minimierung chromatischer Fehler des menschlichen Auges berechnet werden kann.

Die WO 2006/020 422 A1 beschreibt die Korrektur der Presbyopie einer Person durch eine optische Gestalt, die dafür sorgt, dass unabhängig vom Abstand eines Objekts zum Auge möglichst immer ein Fokus eines Bildes des Objekts auf der Retina erzeugt wird. Dabei wird ausgenutzt, dass unterschiedliche Farben in unterschiedlichen Ebenen um die Retina fokussieren. Die Aufgabe der Erfindung besteht darin, ein Verfahren zum Fertigen einer Brillenlinse bereitzustellen, das der natürlichen Sehleistung des menschlichen Auges Rechnung trägt. Die Brillenlinse soll vergleichsweise kostengünstig herstellbar sein.

Diese Aufgabe wird durch ein Verfahren mit den Merkmalen des Patentanspruchs 1 oder des nebengeordneten Patentanspruchs 5 gelöst. Vorteilhafte Ausführungen und Weiterbildungen der Erfindung sind in den Unteransprüchen angegeben.

Bei dem erfindungsgemäßen Verfahren bedarf es der Bereitstellung einer Verordnung, d.h. eines Rezepts, für die zu Korrektionszwecken dienende Brillenlinse. Unter Brillenlinse oder dem synonym verwendeten Begriff Brillenglas soll vorliegend eine optische Linse verstanden werden, die zur Korrektion der Fehlsichtigkeit eines menschlichen Auges dient und deren Korrektionswirkung ausschließlich auf ihrer optischen Brechkraft beruht. Die Stärke bzw. optische Wirkung der Brillenlinse und deren Verteilung über deren Oberfläche wird dabei auf Basis von zuvor durchgeführten Messungen der sogenannten objektiven und/oder subjektiven Refraktion berechnet. Die ermittelten Werte der Refraktionsmessung werden in ein spezielles Brillenrezept übertragen, das dem Augenoptiker zur Anfertigung der Gläser übergeben wird oder das dieser selbst mit Hilfe entsprechender Hilfsmittel erstellt. Das Brillenrezept bzw. die gleichbedeutende Verordnung umfasst im Allgemeinen für Einstärkengläser die Werte für die sphärische Wirkung, die astigmatische Wirkung und deren Achslage sowie die prismatische Wirkung und deren Basislage. Weiter können individuelle Gebrauchsbedingungen, wie Pupillenabstand, Hornhautscheitelabstand etc. angegeben sein. Bei Mehrstärkengläsern sind weitere Angaben erforderlich. Insbesondere ist bei Gleitsicht- oder Bifokalgläsern auch noch der Nahzusatz, die sogenannte Addition, angegeben.

In einem weiteren Verfahrensschritt wird ein zur Herstellung der Brillenlinse geeignetes Material herausgesucht bzw. bereitgestellt. Als Materialien werden Mineralgläser als auch Kunststoffe eingesetzt. Es gibt sogenannte niederbrechende Mineralgläser wie z.B. Brillenkron, Barium-Kron oder Borosilikatglas und hochbrechende Mineralgläser wie z.B. Schwerflint oder Bariumflint. Weiterhin unterscheidet man zwischen niederbrechenden Kunststoffen, wie z.B. die unter den Produktnamen CR 39 oder CR 330 von der Firma Pittsburg Plate Glass angebotenen Materialien und hochbrechenden Kunststoffen, wie z.B. die unter den Produktnamen MR6 oder MR7 von Mitsui Toasu Chemicals auf den Markt gebrachten Materialien. Alle diese Materialien haben mehr oder weniger stark ausgeprägte Dispersionseigenschaften der Brechzahl für den maßgeblichen sichtbaren Wellenlängenbereich, so dass die auf einer einzigen Designwellenlänge beruhenden Berechnungsverfahren zur Bestimmung eines Brillenlinsendesigns keine auf polychromatisches Licht ausgelegte Resultate liefern.

Die Erfindung sieht daher abweichend vom betriebsintern bekannten Stand der Technik vor, das Brillenlinsendesign auf Basis wenigstens zweier Designwellenlängen zu berechnen. Demnach müssen zunächst wenigstens zwei geeignete Designwellenlängen bereitgestellt werden. Als geeignet haben sich Wellenlängen herausgestellt, die in charakteristischer Weise repräsentativ für die spektrale Empfindlichkeit des menschlichen Auges sowie die bevorzugte(n) Gebrauchsbedingung(en) sind. Wird die Brillenlinse z.B. vorzugsweise unter Tageslichtbedingungen eingesetzt, so sind z.B. Designwellenlängen in der Nähe des Maximums der spektralen Empfindlichkeit des Auges für photopisches Sehen geeignet. Wird die Brillenlinse andererseits lediglich als Nacht- oder Dämmerungs-Brille eingesetzt, so wählt man Designwellenlängen in der Nähe des Maximums der spektralen Empfindlichkeit des Auges für mesopisches oder skotopisches Sehen. Als Designwellenlängen für Bildschirmbrillen werden z.B. Werte im Bereich zwischen 500 nm und 650 nm verwendet. Für eine Alltagsbrille nimmt man z.B. als Designwellenlängen die Wellenlängen der maximalen spektralen Empfindlichkeit für photopisches und skotopisches Sehen, also 550 nm und 510 nm. Es wird hiermit explizit noch einmal klargestellt, dass auch die Verwendung von mehr als zwei ausgewählten Designwellenlängen in Betracht kommt. Um den Rechenaufwand begrenzt zu halten, werden üblicherweise weniger als 20 Designwellenlängen, meist jedoch sogar weniger als 10 Designwellenlängen bereitgestellt.

In einem weiteren Schritt werden die jeweiligen Brechzahlen des zur Herstellung der Brillenlinse vorgesehenen und bereitgestellten Materials für die wenigstens zwei Designwellenlängen, z.B. aus dem üblicherweise bekannten Dispersionsverlauf oder durch Messung, bestimmt. Es ist auch möglich, die Brechzahlen aus einem Datenblatt zu entnehmen.

In einem nachfolgenden Schritt wird auf Basis der jeweiligen, den vorgegebenen Designwellenlängen entsprechenden Brechzahlen ein eigenes Design, also eine entsprechende geometrische Gestalt der Brillenlinse oder anders ausgedrückt die jeweilige geometrische Gestalt der beiden Brillenlinsenflächen, für die zuvor vorgegebene Verordnung berechnet. Diese Designs bzw. geometrischen Modelle einer Brillenlinse für jede Designwellenlänge werden im Rahmen der vorliegenden Beschreibung als Vor-Designs bezeichnet. Verfahren zur Bestimmung eines Vor-Designs sind z.B. in der DE 197 01 312 A1 oder der DE 42 10 008 A1 beschrieben. Jedes Vor-Design kann (muss aber nicht) aus einer flächigen oder punktuellen Minimierung der Bildfehler für den späteren Brillenträger entstanden sein.

Aus diesen Vor-Designs für jede Designwellenlänge wird ein finales Design berechnet. Oder anders ausgedrückt wird aus den jeweiligen vorläufigen geometrischen Gestalten die endgültige Gestalt der Brillenlinse berechnet.

Das finale Design, das die Geometrie der Brillenlinse darstellt, die für die fehlsichtige Person hergestellt wird, wird durch rechnerische Mittelwertbildung der Vor-Designs berechnet. Konkret kann dies bedeuten, dass aus den ermittelten lokalen Krümmungen der Linsenflächen der Vor-Designs mittlere lokale Krümmungen gebildet werden. Die Gesamtheit der mittleren lokalen Krümmungen der Linsenflächen stellt dann das finale Design dar. Ein derartiges Berechnungsverfahren zeichnet sich durch seine Einfachheit aus.

Eine rechnerische Mittelwertbildung kann auch darin bestehen, die Pfeilhöhen der Linsenflächen zu ermitteln. Ein Sonderfall der Mittelwertbildung stellt die arithmetische Mittelung dar. Für örtlich zugeordnete ermittelte Krümmungen der Linsenflächen oder Pfeilhöhen der Linsenflächen der Vor-Designs können z.B. jeweils arithmetische Mittelwerte berechnet werden, die die Krümmungen oder Pfeilhöhen zur Herstellung der für den Fehlsichtigen vorgesehenen Brillenlinse darstellen.

Es ist möglich, bei der Berechnung des Designs wenigstens zwei der Vor-Designs unterschiedlich zu gewichten. So ist es z.B. möglich, dass entsprechend die vorstehend angegebenen Krümmungen oder Pfeilhöhen der Vor-Designs mit unterschiedlicher Gewichtung in die Mittelung eingehen.

Nach der mathematischen Berechnung des finalen Designs werden diese in Fertigungsparameter übertragen, auf Basis derer die Brillenlinsen hergestellt wird. Anstelle einer Berechnung von Vor-Designs und anschließender Bestimmung des finalen Designs kann man auch die optischen Eigenschaften an unterschiedlichen Punkten auf einem Modell einer Brillenlinse mit vorgegebener Gestalt der Vorder- und Rückflächen, für jede der zuvor ermittelten Brechzahlen des Materials unter Berücksichtigung der Verordnung z.B. mit Hilfe der Strahlverfolgungsmethode berechnen und aus diesen für jeden Punkt ermittelten optischen Eigenschaften für unterschiedliche Brechzahlen das finale Design der Brillenlinse errechnen. Es ist insbesondere möglich, zum Berechnen der finalen Designs der Brillenlinse die optischen Eigenschaften an den jeweiligen unterschiedlichen Punkten für die aus den wenigstens zwei Designwellenlängen ermittelten Brechzahlen gemittelt zu gewichten. Unter optischen Eigenschaften versteht man insbesondere sphärische, astigmatische und prismatische Fehler.

Auch diese Varianten zeichnen sich durch ihre Einfachheit aus.

Die vorstehend beschriebenen Verfahren können z.B. in Form eines Computerprogramms mit Programmcodemitteln vorliegen und z.B. auf einem Datenträger abgespeichert sein. Das Computerprogramm kann dann in einem Computer gestartet werden, so dass das jeweilige Verfahren ausgeführt wird.

Die Erfindung wird nunmehr anhand der Zeichnungen näher beschrieben. Es zeigen:
- Figur 1: einen Ablaufplan eines ersten Ausführungsbeispiels eines erfindungsgemäßen Verfahrens
- Figur 2: unterschiedliche optische Wirkungsverteilungen auf einem Brillenglas für unterschiedliche Wellenlängen des einfallenden Lichts
- Figur 3: einen Ablaufplan eines zweiten Ausführungsbeispiels eines erfindungsgemäßen Verfahrens

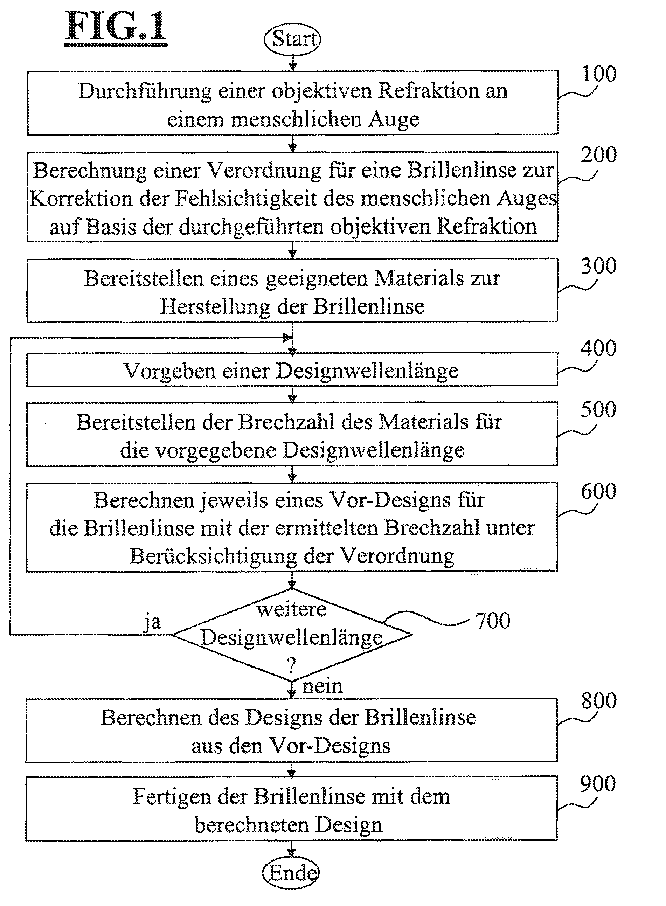

Die Figur 1 zeigt einen Ablaufplan eines ersten Ausführungsbeispiels eines erfindungsgemäßen Verfahrens. In einem ersten Schritt 100 führt der Augenoptiker eine objektive Refraktion am Auge einer fehlsichtigen Person mit Hilfe eines Autorefraktors durch. Der Autorefraktor ermittelt aus den am Auge durchgeführte Messungen Rezeptwerte für Sphäre (sph), Zylinder (cyl) und dessen Achslage (ax) und stellt diese in Form einer Verordnung bereit (Schritt 200). Exemplarisch sei angenommen, dass diese Rezeptwerte sph = 3,25 dpt, cyl = 0,75 dpt und ax = 80° seien. Der Augenoptiker informiert sich beim Kunden über dessen bevorzugten Verwendungszweck der Brille. Hier wird angenommen, dass der Kunde die Brille für den Verwendungszweck der Brille. Hier wird angenommen, dass der Kunde die Brille für den täglichen Gebrauch vorgesehen hat. In Rücksprache mit der fehlsichtigen Person sucht der Augenoptiker ein geeignetes Brillenglasmaterial heraus. Für das vorliegende Beispiel wird angenommen, dass CR 39 ausgewählt wurde (Schritt 300). Die Verordnung mit den Rezeptwerten sph = 3,25 dpt, cyl = 0,75 dpt und ax = 80°, die Materialart CR 39 sowie der Verwendungszweck "Alltagsbrille" wird an einen Brillenglashersteller übermittelt.

Auf Basis der vom Augenoptiker zur Verfügung gestellten Informationen, die über eine entsprechende Eingabeeinrichtung in einen Computer eingegeben werden können, stellt der Brillenglashersteller z.B. fest, dass sich aus fünf unterschiedlichen Designwellenlängen nämlich 480nm, 510nm, 520nm, 555nm und 610nm, ein für die fehlsichtige Person geeignetes Brillenglas berechnen lässt. Zunächst wird die Designwellenlänge 480 nm vorgegeben (Schritt 400). In einem weiteren Schritt 500 wird für die Designwellenlänge 480 nm die Brechzahl von CR 39 bestimmt Diese beträgt n=1.504. Anhand der für die Designwellenlänge 480 nm bestimmten Brechzahl wird mit den Rezeptwerten in einem weiteren Schritt 600 ein Vor-Design berechnet. Das Vor-Design enthält alle geometrischen Informationen wie z.B. die Pfeilhöhen und/oder die Krümmungsverteilung über die beiden Linsenflächen. Weiterhin werden die zugehörigen dioptrischen Informationen für diese Wellenlänge wie z.B. die Wirkungsverteilung und Verteilung des astigmatischen Fehlers über die gesamte Linsenfläche berechnet. Für die weiteren Designwellenlängen 510 nm, 520 nm, 555 nm und 610 nm wird diese Prozedur wiederholt (Abfrage 700). Demnach errechnet der Computer für jede Designwellenlänge ein vollständiges geometrisches und optisches Modell des zu dieser Design-Wellenlänge zugehörigen Brillenglases.

Aus diesen Vor-Designs wird in Schritt 800 ein finales Design nach folgender Vorschrift berechnet: Es erfolgt zunächst die Festlegung von für die Berechnung des finalen Designs relevanten Punkten auf dem Brillenglas. Diese Punkte können entweder gleichmäßig in einem Rechteckgitter auf dem Brillenglas platziert werden, sie können entsprechend dem Bahnverlauf der späteren Bearbeitungsmaschine platziert werden oder sie können entsprechend den optischen Eigenschaften eines oder mehrerer Vor-Designs platziert werden. In einem zweiten Schritt erfolgt dann eine gewichtete Mittelung der lokalen Krümmungen für jeden dieser Punkte auf dem Brillenglas. Die Gewichtung erfolgt anhand der durchschnittlichen spektralen Empfindlichkeit des menschlichen Auges, wie z.B. im Handbuch für Augenoptik, Hrsg. Carl Zeiss, Markenoptik, neu bearbeitet von Dr. Helmut Goersch, 4. Auflage, C. Maurer Druck -F Verlag aus dem Jahr 2000 auf S. 82 beschrieben ist. Das finale Design liefert die Fertigungsparameter zur Herstellung der für die fehlsichitige Person vorgesehenen Brillenlinse (Schritt 900).

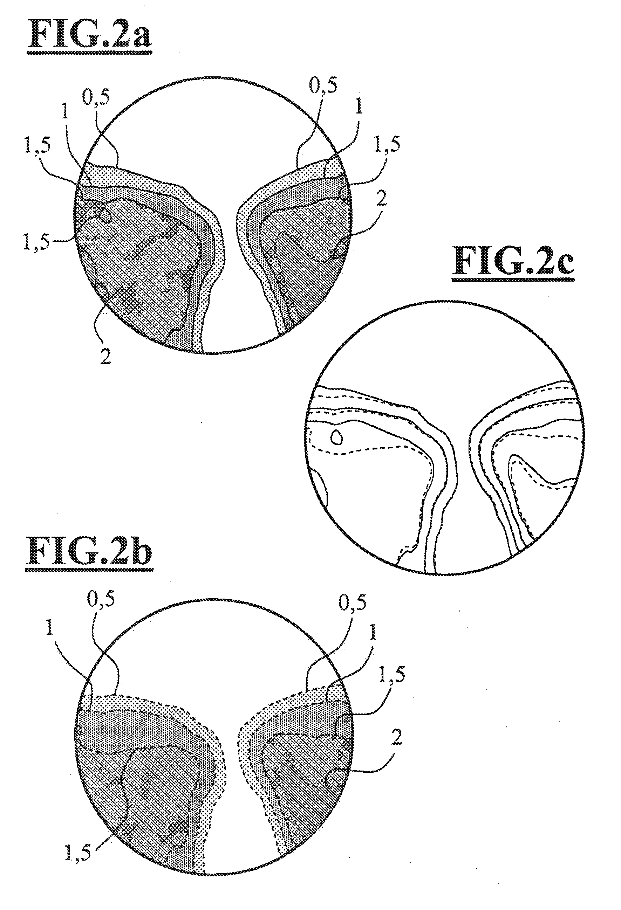

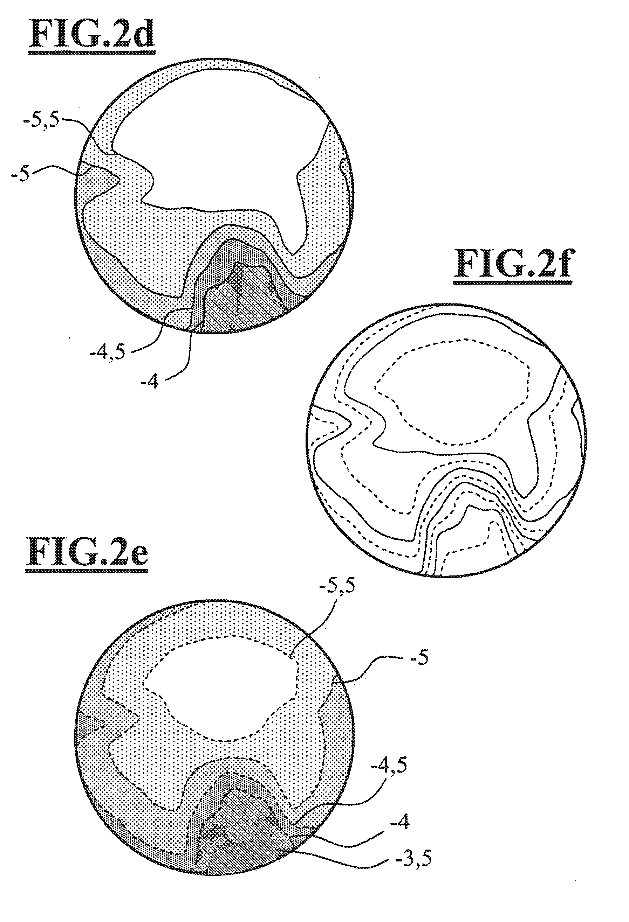

Die Figur 2 verdeutlicht noch einmal anhand eines Beispiels, dass die optische Wirkung bzw. Brechkraftverteilung über dem Brillenglas von der Wellenlänge des Lichts abhängt. In der Figur 2 dargestellt sind optische Wirkungsverteilungen eines Brillenglases vom Typ Lantal Gradal Top der Anmelderin mit dem Rezept werten Sphäre -6,0 dpt, Addition 2,0 dpt. Für die Wellenlänge λ ₁ von 436 nm beträt die Brechzahl n₁ der Linse 1,8369, für die Wellenlänge λ₂ = 644 nm beträgt die Brechzahl n₂ = 1,7958.

Figur 2a) zeigt die astigmatische Wirkungsverteilung über der Linsenfläche für λ₁ = 436 nm, n₁= 1,8369. Figur 2b) zeigt die astigmatische Wirkungsverteilung über der Linsenfläche für λ₂= 644 nm, n₂ = 1,7958. Figur 2c) zeigt die Überlagerung der astigmatischen Höhenprofile nach den Figuren 2a) und 2b). Figur 2d) zeigt die sphärische Wirkungsverteilung über der Linsenfläche für λ₁ = 436 nm, n₁ = 1,8369. Figur 2e) zeigt die sphärische Wirkungsverteilung über der Linsenfläche für λ₂ = 644 nm, n₂ = 1,7958. Figur 2f) zeit die Überlagerung der sphärischen Wirkungsverteilungen nach den Figuren 2d) und 2e).

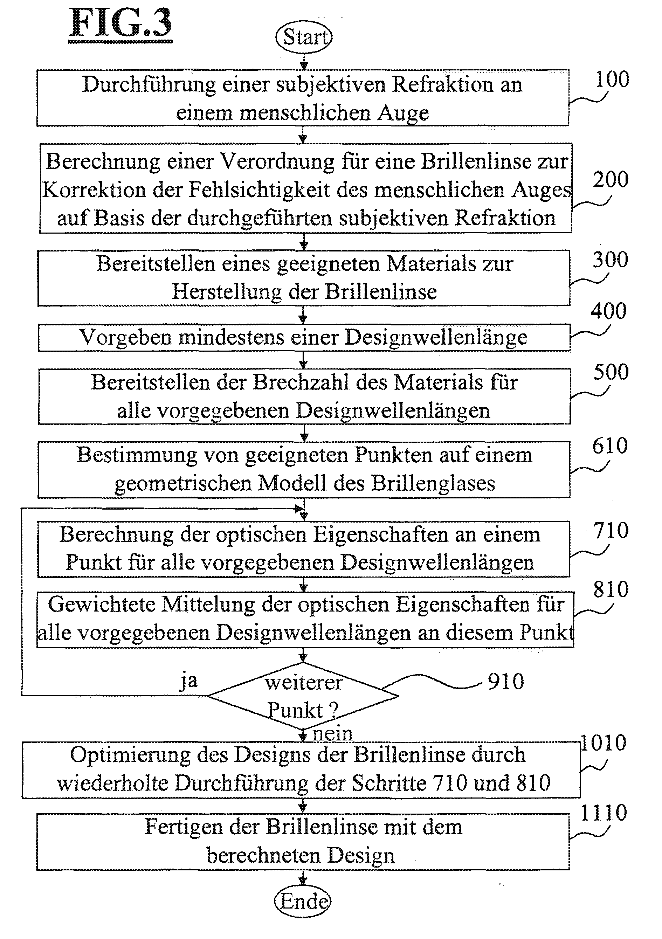

Die Figur 3 zeigt einen Ablaufplan eines zweiten Ausführungsbeispiels eines erfindungsgemäßen Verfahrens. In einem ersten Schritt 100 führt der Augenoptiker eine subjektive Refraktion am Auge einer fehlsichtigen Person durch. Die subjektive Refraktion liefert als Ergebnis Rezeptwerte für Sphäre (sph), Zylinder (cyl) und dessen Achslage (ax) und stellt diese in Form einer Verordnung bereit (Schritt 200). Exemplarisch sei angenommen, dass diese Rezeptwerte sph = 3,25 dpt, cyl = 0,75 dpt und ax = 80° seien. Der Augenoptiker informiert sich beim Kunden über dessen bevorzugten Verwendungszweck der Brille. Hier wird angenommen, dass der Kunde die Brille für den nächtlichen Gebrauch und in der Dämmerung vorgesehen hat. In Rücksprache mit der fehlsichtigen Person sucht der Augenoptiker ein geeignetes Brillenglasmaterial heraus. Für das vorliegende Beispiel wird angenommen, dass CR 39 ausgewählt wurde (Schritt 300). Die Verordnung mit den Rezeptwerten sph = 3,25 dpt, cyl = 0,75 dpt und ax = 80°, die Materialart CR 39 sowie der Verwendungszweck "Dämmerungsbrille" wird an einen Brillenglashersteller übermittelt.

Auf Basis der vom Augenoptiker zur Verfügung gestellten Informationen, die über eine entsprechende Eingabeeinrichtung in einen Computer eingegeben werden können, stellt der Brillenglaslaersteller z.B. fest, dass sich aus drei unterschiedlichen Designwellenlängen nämlich 480 nm, 500 nm und 520 nm, ein für die fehlsichtige Person geeignetes Brillenglas berechnen lässt (Schritt 400). In einem weiteren Schritt 500 wird für die ausgewählten Designwellenlängen die Brechzahl von CR 39 bestimmt.

In einem weiteren Schritt (610) erfolgt die Festlegung von für die Berechnung des finalen Designs relevanten Punkten auf dem Brillenglas. Diese Punkte können entweder gleichmäßig in einem Rechteckgitter auf einem geometrischen Modell des Brillenglases platziert werden, sie können entsprechend dem Bahnverlauf der späteren Bearbeitungsmaschine platziert werden oder sie können entsprechend den optischen Eigenschaften eines oder mehrerer aus Vorüberlegungen oder Trägeversuchen resultierenden Vor-Designs platziert werden

Anhand der für die verschiedenen Designwellenlängen bestimmten Brechzahlen werden mit den Rezeptwerten in einem weiteren Schritt 710 die optischen Eigenschaften für jede dieser Brechzahlen an einem ersten Punkt auf dem geometrischen Modell des Brillenglases berechnet. Diese optischen Eigenschaften für die verschiedenen Brechzahlen an diesem Punkt werden in einem weiteren Schritt 810 gewichtet gemittelt.

Für die weiteren Punkte wird diese Prozedur wiederholt (Abfrage 910). Die optischen Eigenschaften können z. B. die Verteilung von Abbildungsfehlern (z. B. die sphärischen oder astigmatischen Abbildungsfehler) umfassen, die auftreten, wenn der Brillenträger, für den das Brillenglas konzipiert ist, das Brillenglas unter den zugrundegelegten Gebrauchsbedingungen trägt.

In einem Schritt 1010 wird dann durch wiederholte Durchführung der Schritte 710 bis 910 ein finales Design entsprechend gängigen Optimiermethoden für Brillengläser berechnet. Ein Optimierverfahren ist z. B. in der DE 42 10 008 A1 (US 5,44,503 A), ein anderes in DE 197 01 312 A1 (US 6,089,713 A) beschrieben.

Der Vollständigkeit halber sei angemerkt, dass die o. a. Designwellenlängen anstelle einer Festlegung durch den Brillenglashersteller auch basierend auf individuellen Empfindlichkeiten des aktuellen Kunden durch den Augenoptiker an die Brillenglashersteller übermittelt werden könnten.

## Patentansprüche

1. Verfahren zum Fertigen einer refraktiven Brillenlinse mit folgenden Verfahrensschritten:
- Bereitstellen einer Verordnung für die Brillenlinse (200);
- Bereitstellen eines Materials zur Herstellung der Brillenlinse (300);
- Bereitstellen wenigstens zweier Designwellenlängen (400) für monochromatisches Licht zum Berechnen eines die geometrische Gestalt einer Brillenlinse für eine Verordnung darstellenden Designs mit Hilfe eines numerischen Lichtstrahlverfolgungsverfahrens;
- Berechnen jeweils eines eine vorläufige geometrische Gestalt der Brillenlinse für die bereitgestellte Verordnung darstellenden Vor-Designs für die Brillenlinse mit der jeweiligen ermittelten Brechzahl des Materials für die jeweiligen Designwellenlängen (600, 700) mit Hilfe eines numerischen Lichtstrahlverfolgungsverfahrens;
- Berechnen des die endgültig geometrische Gestalt der Brillenlinse für die bereitgestellte Verordnung darstellenden Designs der Brillenlinse durch Mittelwertbildung der Vor-Designs für die Brillenlinse für die aus den jeweiligen Designwellenlängen ermittelten Brechzahlen (800); und
- Formen der Brillenlinse nach dem Design.

2. Verfahren nach Anspruch 1, bei dem als Designwellenlängen die Wellenlängen der maximalen Empfindlichkeit des menschlichen Auges bei photopischem Sehen und bei skotopischem Sehen verwendet werden.

3. Verfahren nach Anspruch 1 oder 2, **dadurch gekennzeichnet, dass** das Design durch arithmetische Mittelwertbildung der Vor-Designs berechnet wird.

4. Verfahren nach einem der Ansprüche 1 bis 3, **dadurch gekennzeichnet, dass** bei der Berechnung des Designs wenigstens zwei der optischen Vor-Designs unterschiedlich gewichtet werden.

5. Verfahren zum Fertigen einer refraktiven Brillenlinse mit folgenden Verfahrensschritten:
- Bereitstellen einer Verordnung für die Brillenlinse (200);
- Bereitstellen eines Materials zur Herstellung der Brillenlinse (300);
- Bereitstellen wenigstens zweier Designwellenlängen (400) für monochromatisches Licht zum Berechnen eines die geometrische Gestalt einer Brillenlinse für eine Verordnung darstellenden Designs mit Hilfe eines numerischen Lichtstrahlverfolgungsverfahrens;
- Bereitstellen der jeweiligen Brechzahlen des Materials für die wenigstens zwei Designwellenlängen (500);
- Berechnen von optischen Eigenschaften an unterschiedlichen Punkten auf einem geometrischen Modell einer Brillenlinse für jede der ermittelten Brechzahlen des Materials für die wenigstens zwei Designwellenlängen unter Berücksichtigung der Verordnung (610,710, 810,910) mit Hilfe eines numerischen Lichtstrahlverfolgungsverfahrens;
- Berechnen des eine geometrische Gestalt der Brillenlinse für die bereitgestellte Verordnung darstellenden Designs der Brillenlinse aus den optischen Eigenschaften an den unterschiedlichen Punkten auf der Brillenlinse für die aus den wenigstens zwei Designwellenlängen ermittelten Brechzahlen (1010, 1110), wobei die optischen Eigenschaften an den jeweiligen unterschiedlichen Punkten für die aus den wenigstens zwei Designwellenlängen ermittelten Brechzahlen gewichtet gemittelt werden; und wobei die optischen Eigenschaften an jedem Punkt die sphärischen oder astigmatischen Abbildungsfehler umfassen, die auftreten, wenn der Brillenträger, für den die Brillenlinse (200) konzipiert ist, die Brillenlinse (200) unter den zugrunde gelegten Gebrauchsbedingungen trägt und
- Formen der Brillenlinse nach dem Design.

6. Computerprogramm mit Programmcodemitteln zur Durchführung des Verfahrens nach einem der vorangegangenen Ansprüche, wenn das Programm auf einem Computer ausgeführt wird.

7. Datenträger mit elektronisch auslesbaren Steuersignalen, die so mit einem programmierbaren Computersystem zusammenwirken können, dass ein Verfahren nach einem der Ansprüche 1 bis 5 ausgeführt wird.

## Claims

1. Method for manufacturing a refractive spectacle lens, comprising the following method steps:
- providing a prescription for the spectacle lens (200);
- providing a material for producing the spectacle lens (300);
- providing at least two design wavelengths (400) for monochromatic light for calculating a design representing the geometric form of a spectacle lens for a prescription, with the aid of a numerical ray tracing method;
- respectively calculating a pre-design for the spectacle lens, representing a preliminary geometric form of the spectacle lens for the provided prescription, with the respectively established refractive index of the material for the respective design wavelengths (600, 700), with the aid of a numerical ray tracing method;
- calculating the design of the spectacle lens, representing the final geometric form of the spectacle lens for the provided prescription, by forming the mean of the pre-design for the spectacle lens for the refractive indices established from the respective design wavelengths (800); and
- forming the spectacle lens according to the design.

2. Method according to Claim 1, wherein the wavelengths of maximum sensitivity of the human eye in photoptic vision and scotopic vision are used as design wavelengths.

3. Method according to Claim 1 or 2, **characterized in that** the design is calculated by forming the arithmetic mean of the pre-designs.

4. Method according to one of Claims 1 to 3, **characterized in that** at least two of the optical pre-designs are weighted differently when calculating the design.

5. Method for manufacturing a refractive spectacle lens, comprising the following method steps:
- providing a prescription for the spectacle lens (200);
- providing a material for producing the spectacle lens (300);
- providing at least two design wavelengths (400) for monochromatic light for calculating a design representing the geometric form of a spectacle lens for a prescription, with the aid of a numerical ray tracing method;
- providing the respective refractive indices of the material for the at least two design wavelengths (500);
- calculating optical properties at various points on a geometric model of a spectacle lens for each of the established refractive indices of the material for the at least two design wavelengths, taking into account the prescription (610, 710, 810, 910), with the aid of a numerical ray tracing method;
- calculating the design of the spectacle lens, representing a geometric form of the spectacle lens for the provided prescription, from the optical properties at the various points on the spectacle lens for the refractive indices established from the at least two design wavelengths (1010, 1110), wherein the optical properties are averaged with a weighting at the respective various points for the refractive indices established from the at least two design wavelengths; and wherein the optical properties at each point comprise the spherical or astigmatic aberrations which occur when the spectacle wearer, for whom the spectacle lens (200) is designed, wears the spectacle lens (200) under the underlying usage conditions; and
- forming the spectacle lens according to the design.

6. Computer program with program code means for carrying out the method according to one of the preceding claims when the program is executed on a computer.

7. Storage medium with electronically readable control signals which can interact with a programmable computer system in such a way that a method according to one of Claims 1 to 5 is executed.

## Revendications

1. Procédé de fabrication d'un verre de lunette de réfraction comprenant les étapes de procédé consistant à :
- fournir une prescription pour le verre de lunettes (200) ;
- fournir un matériau destiné à la fabrication du verre de lunettes (300) ;
- fourniture d'au moins deux longueurs d'ondes de conception (400) pour une lumière monochromatique afin de calculer une conception représentant la forme géométrique d'un verre de lunettes pour une prescription à l'aide d'un procédé de tracé de rayon optique numérique ;
- calculer respectivement une forme géométrique préliminaire du verre de lunettes pour des préconceptions représentant la prescription fournie pour le verre de lunettes avec l'indice de réfraction déterminé respectif du matériau pour les longueurs d'onde de conception respectives (600, 700) à l'aide d'un procédé de tracé de rayon optique numérique ;
- calculer la forme géométrique finale du verre de lunettes pour des conceptions représentant la prescription fournie du verre de lunettes par calcul de la moyenne des préconceptions pour les verres de lunettes et pour les indices de réfraction (800) déterminés à partir des longueurs d'onde de conception respectives ; et
- former le verre de lunettes conformément à la conception.

2. Procédé selon la revendication 1, dans lequel on utilise en tant que longueurs d'onde de conception des longueurs d'onde de sensibilité maximale de l'oeil humain en vision photopique et en vison scotopique.

3. Procédé selon la revendication 1 ou 2, **caractérisé en ce que** la conception est calculée par calcul de la moyenne arithmétique des préconceptions.

4. Procédé selon l'une quelconque des revendications 1 à 3, **caractérisé en ce qu'**on utilise au moins deux des préconceptions optiques pondérées différemment lors du calcul de la conception.

5. Procédé de fabrication d'un verre de lunettes de réfraction comprenant les étapes de procédé consistant à :
- fournir une prescription pour le verre de lunettes (200) ;
- fournir un matériau destiné à la fabrication du verre de lunettes (300) ;
- fournir au moins deux longueurs d'ondes de conception (400) destinées à une lumière monochromatique afin de calculer une conception représentant la forme géométrique d'un verre de lunettes pour une prescription à l'aide d'un procédé de tracé de rayon optique numérique ;
- fournir l'indice de réfraction respectif du matériau pour lesdites au moins deux longueurs d'onde de conception (500) ;
- calculer des propriétés optiques en différents points sur un modèle géométrique d'un verre de lunettes pour chacun des indices de réfraction déterminés du matériau pour les au moins deux longueurs d'onde de conception en tenant compte de la prescription (610, 710, 810, 910) à l'aide d'un procédé de tracé de rayon optique numérique ;
- calculer la conception du verre de lunette représentant une forme géométrique du verre de lunettes pour la prescription fournie à partir des propriétés optiques en les différents points sur le verre de lunettes pour les indices de réfraction (1010, 1110) déterminés à partir des au moins deux longueurs d'onde de conception, dans lequel les propriétés optiques en les différents points respectifs, pour les indices de réfraction déterminés à partir des au moins deux longueurs d'onde de conception sont moyennés de manière pondérée ; et dans lequel les propriétés optiques en chaque point comprennent les aberrations sphériques ou astigmatiques qui apparaissent lorsque le porteur de lunettes pour lequel le verre de lunettes (200) est conçu, porte le verre de lunettes (200) dans les conditions d'utilisation prises pour base, et
- former le verre de lunettes conformément à la conception.

6. Programme informatique comportant des moyens à base de codes de programme destinés à mettre en oeuvre le procédé selon l'une quelconque des revendications précédentes lorsque le programme est exécuté sur un ordinateur.

7. Support de données portant des signaux de commande lisibles de manière électronique qui peuvent coopérer avec un système informatique programmable de manière à mettre en oeuvre un procédé selon l'une quelconque des revendications 1 à 5.
